# FASCICULE DE BREVET EUROPEEN

(11) **EP 3 781 882 B1**
(45) Date de publication et mention de la délivrance du brevet: **22.03.2023**
(21) Numéro de dépôt: 19724549.1
(22) Date de dépôt: 17.04.2019
(51) Int. Cl.: F25B 6/04, B60H 1/00, B60H 1/32, F25B 29/00, F25B 41/22

(54) **DISPOSITIF DE CONDITIONNEMENT THERMIQUE POUR VÉHICULE AUTOMOBILE**
WÄRMEREGELUNGSVORRICHTUNG FÜR EIN KRAFTFAHRZEUG
THERMAL CONDITIONING DEVICE FOR A MOTOR VEHICLE

(30) Priorité: 19.04.2018 FR 1853444
(43) Date de publication de la demande: 24.02.2021
(73) Titulaire: VALEO SYSTEMES THERMIQUES, 78320 Le Mesnil Saint-Denis (FR)
(72) Inventeur: YAHIA, Mohamed, 78322 LE MESNIL SAINT-DENIS CEDEX (FR); NICOLAS, Bertrand, 78322 LE MESNIL SAINT-DENIS CEDEX (FR)
(74) Mandataire: Valeo Systèmes Thermiques
(86) Numéro de dépôt international: PCT/FR2019/050922
(87) Numéro de publication internationale: WO 2019/202266

(56) Documents cités:
- EP-A2- 3 075 582
- FR-A1- 2 888 919
- FR-A1- 2 983 285

## Description

La présente invention concerne un dispositif de conditionnement thermique pour véhicule automobile hybride ou électrique, plus particulièrement ce type de dispositif permet, entre autres, de conditionner thermiquement un ou plusieurs organes électriques du véhicule, tels que le moteur et/ou la batterie, et/ou un flux d'air destiné à aboutir dans l'habitacle dudit véhicule.

De façon habituelle dans un véhicule automobile, le dispositif de conditionnement thermique comprend un ou plusieurs circuits composés d'une pluralité d'échangeurs thermiques dans lesquels circule un fluide frigorigène et/ou caloporteur.

À titre d'exemple, le document EP 3 075 582 A2 montre un tel dispositif de conditionnement thermique pour véhicule automobile.

Chacun desdits circuits présente ainsi plusieurs modes de fonctionnement qui permettent, par exemple, de chauffer ou de refroidir l'habitacle, déshumidifier l'air destiné à l'habitacle, chauffer ou refroidir un organe électrique, refroidir le moteur, etc. Les échangeurs de chaleur destinés à conditionner thermiquement un flux d'air pour l'habitacle sont généralement disposés dans un boîtier situé sous la planche de bord du véhicule.

Plus particulièrement, dans le cadre d'un véhicule hybride ou électrique, il est également nécessaire de maintenir la batterie électrique (ou un organe électrique quelconque) du véhicule dans une plage de température déterminée afin, par exemple, de préserver sa durée de vie. A cet effet, le dispositif de conditionnement thermique comprend un échangeur thermique couplé thermiquement à un organe électrique du véhicule, tel qu'une batterie électrique du véhicule, afin réguler la température dudit organe.

Ainsi, la présente invention vise à proposer un nouveau type de dispositif de conditionnement thermique, d'une conception simple, qui permet d'assurer le confort des usagers grâce à une pluralité de modes de fonctionnement pour faire face à diverses conditions extérieures de température et d'humidité, tout en permettant de conditionner thermiquement au moins un organe électrique du véhicule automobile.

La présente invention est un dispositif de conditionnement thermique pour un véhicule automobile hybride ou électrique, comme défini par la revendication indépendante 1 annexée.

L'architecture spécifique du deuxième circuit en combinaison avec un premier circuit dédié au conditionnement thermique de l'air destiné à l'habitacle, permet notamment d'augmenter les performances du dispositif de conditionnement thermique, et plus particulièrement du premier circuit lorsque celui-ci fonctionne en mode climatisation.

Par ailleurs, grâce au condenseur sur eau, il n'est pas nécessaire de disposer un condenseur sur air sur le chemin du flux d'air destiné à l'habitacle, ce qui a pour avantage d'éviter un réchauffement parasite de ce flux d'air notamment lorsqu'on cherche à refroidir celui-ci.

On notera qu'on entend par « mode climatisation », un mode de fonctionnement du premier circuit dans lequel :
- l'évaporateur est traversé par un flux d'air afin d'être refroidi avant que celui-ci ne débouche dans l'habitacle du véhicule ;
- l'évapo-condenseur fonctionne en tant que condenseur.

On notera que le terme « extérieur » utilisé pour qualifier un flux d'air qui provient de l'extérieur du véhicule.

Selon une caractéristique possible, le dispositif est configuré de manière à ce que le fluide caloporteur du deuxième circuit circule successivement dans le condenseur et le radiateur de refroidissement lorsque le premier circuit fonctionne en mode climatisation.

Selon une autre caractéristique possible, le radiateur de refroidissement est disposé en aval de l'évapo-condenseur de manière à pouvoir être traversé par au moins une partie du flux d'air extérieur ayant traversé ledit évapo-condenseur.

Dans cette configuration particulière, les performances en mode climatisation du premier circuit sont améliorées, en effet, cela permet d'augmenter les performances de l'évapo-condenseur par l'effet pré-refroidisseur du condenseur sur l'eau.

Selon une autre caractéristique possible, le deuxième circuit comprend un radiateur de chauffage disposé en parallèle du radiateur de refroidissement.

Il est avantageux de disposer d'un radiateur de chauffage qui permettra de chauffer le flux d'air destiné à l'habitacle. Le radiateur de chauffage est donc disposé dans le boîtier de conditionnement thermique.

Selon une autre caractéristique possible, le deuxième circuit comprend une ou plusieurs vannes configurées pour que le deuxième circuit fonctionne selon les modes suivants, dans lesquels le fluide caloporteur est apte à circuler successivement en série par :
- le condenseur puis par le radiateur de refroidissement, ou
- le condenseur et le radiateur de chauffage ;
ou dans lequel le fluide caloporteur est apte à circuler par le condenseur et à la fois par le radiateur de refroidissement et le radiateur de chauffage qui sont disposés en parallèle l'un par rapport à l'autre.

Selon une autre caractéristique possible, le deuxième circuit comprend un dispositif de chauffage électrique du fluide caloporteur qui est disposé en amont du radiateur de chauffage.

Le dispositif de chauffage électrique permet de chauffer le fluide caloporteur qui traverse ensuite le radiateur de chauffage afin d'amener à la température souhaitée ledit flux d'air traversant le radiateur de chauffage, ceci est particulièrement intéressant lorsque que les conditions extérieures ne permettent pas à au dispositif selon l'invention d'atteindre les températures souhaitées.

Selon l'invention, le dispositif comprend un troisième circuit dans lequel circule un fluide caloporteur, ledit troisième circuit comprenant une pompe, un organe électrique du véhicule et un échangeur thermique couplant thermiquement les premier et troisième circuits.

Le troisième circuit est plus particulièrement dédié au conditionnement thermique de la batterie. Par ailleurs, le couplage thermique au premier circuit permet une gestion plus efficace de la température de la batterie.

Selon l'invention, les deuxième et troisième circuits sont interconnectés.

L'interconnexion entre les deuxième et troisième circuits permet des modes de fonctionnement supplémentaires et d'augmenter l'efficacité du dispositif de conditionnement thermique en fonction des conditions extérieures (température, humidité, etc.).

En plus, selon l'invention, le dispositif comprend une ou plusieurs vannes configurées pour permettre au fluide caloporteur de circuler de façon indépendante dans les deuxième et troisième circuits.

Selon une autre caractéristique possible, le dispositif comprend un circuit de fluide caloporteur couplé thermiquement au moteur du véhicule, dit circuit moteur, ledit circuit moteur comprenant une pompe et un radiateur de refroidissement du moteur.

Le radiateur de refroidissement du moteur est disposé préférentiellement en amont, mais il peut être disposé en aval, par rapport au flux d'air extérieur, de l'évapo-condenseur.

Selon une autre caractéristique possible, le circuit moteur est connecté fluidiquement aux deuxième et troisième circuits.

La connexion fluide entre les deuxième et troisième circuits permet, par exemple, un chauffage ou un refroidissement plus efficace du moteur.

Selon une autre caractéristique possible, le premier circuit comprend le compresseur, le condenseur, l'évapo-condenseur, l'évaporateur et l'échangeur thermique couplé thermiquement à l'organe électrique, tel qu'une batterie électrique de véhicule,
caractérisé en ce que le premier circuit est configuré pour fonctionner au moins selon les trois modes suivants, dans lesquels le fluide frigorigène est apte à circuler en série et de façon successive :
   - par le condenseur, l'évapo-condenseur et l'évaporateur, dit premier mode ;
   - par le condenseur, l'évaporateur et l'évapo-condenseur, dit deuxième mode ;
ainsi que selon un autre mode, dit troisième mode, dans lequel l'évaporateur, est disposé en parallèle de l'échangeur thermique et/ou de l'évapo-condenseur, le fluide frigorigène étant alors apte à circuler en série et de façon successive par le condenseur puis par au moins deux desdits éléments disposés en parallèle.

Ainsi, le premier circuit permet dans le premier mode de fonctionnement de refroidir l'air destiné à l'habitacle, dans le deuxième mode de chauffer l'air destiné à l'habitacle et dans le troisième mode de déshumidifier l'air destiné à l'habitacle et de refroidir l'organe électrique lorsque ledit échangeur thermique est parcouru par le fluide frigorigène.

Le troisième mode permet par sa modularité d'assurer la fonction déshumidification de l'air selon des températures et des degrés d'humidité extérieurs variés, tout en refroidissant l'organe et/ou une batterie électrique du véhicule lorsque cela est nécessaire.

Selon une caractéristique possible, l'évapo-condenseur est disposé en face avant du véhicule, l'évapo-condenseur permet par exemple un échange de chaleur entre un flux d'air, notamment extérieur, traversant ledit évapo-condenseur et le fluide frigorigène (circulant à l'intérieur de l'évapo-condenseur).

Selon une autre caractéristique possible, l'évaporateur est disposé à l'intérieur d'un dispositif de ventilation, chauffage et/ou climatisation du véhicule automobile.

Un dispositif de ventilation, chauffage, et/ou climatisation est un boîtier, situé sous la planche de bord du véhicule, qui comporte un ou plusieurs échangeurs thermiques du circuit de conditionnement thermique, un pulseur d'air, au moins une entrée d'air et des sorties d'air. Ledit dispositif comprend également des volets pour la gestion des flux d'air à l'intérieur dudit dispositif.

Selon une autre caractéristique possible, le radiateur de chauffage est disposé à l'intérieur du dispositif de ventilation, chauffage et/ou climatisation du véhicule.

Selon une autre caractéristique possible, le premier circuit est configuré pour fonctionner selon le mode suivant, dans lequel le fluide frigorigène est apte à circuler en série et de façon successive par le condenseur, l'échangeur thermique, et l'évapo-condenseur, dit quatrième mode.

Selon une autre caractéristique possible, le premier circuit est configuré pour que le circuit fonctionne selon le mode suivant, dans lequel le fluide frigorigène est apte à circuler en série et de façon successive par le condenseur, l'évapo-condenseur et l'échangeur thermique, dit cinquième mode.

Selon une autre caractéristique possible, le premier circuit est configuré pour permettre l'inversion du sens de circulation du fluide frigorigène dans l'évapo-condenseur au moins entre les premier et deuxième modes de fonctionnement dudit circuit.

Selon une autre caractéristique possible, ledit premier circuit comprend un détendeur bidirectionnel qui permet au fluide réfrigérant le traversant ou ayant traversé l'évapo-condenseur de subir une détente, que l'évapo-condenseur fonctionne en évaporateur ou en condenseur.

Le détendeur bidirectionnel est ainsi configuré pour réaliser une détente du fluide réfrigérant dans le deuxième ou le quatrième mode de fonctionnement avant qu'il ne circule dans l'évapo-condenseur.

Le détendeur bidirectionnel est également configuré pour réaliser une détente du fluide réfrigérant dans certaines variantes du troisième mode de fonctionnement après que le fluide ait circulé dans l'évapo-condenseur.

Selon une autre caractéristique possible, ledit premier circuit comprend au moins trois détendeurs :
- un premier détendeur situé directement en amont de l'évaporateur ;
- un deuxième détendeur situé directement en amont de l'échangeur thermique ;
- un troisième détendeur situé directement en amont de l'évapo-condenseur lorsque celui-ci fonctionne comme un condenseur.

On notera qu'on entend par directement, le fait que le fluide réfrigérant ne traverse aucun autre élément intermédiaire pouvant lui faire subir une transformation physique (amenant à une variation d'une grandeur physique du fluide, telle que la pression, l'enthalpie, etc.), l'élément intermédiaire étant par exemple un échangeur, détendeur, etc.

Selon une autre caractéristique possible, le premier circuit comprend :
- une première branche comportant le compresseur et le condenseur en aval du compresseur, ainsi qu'une vanne et un réservoir, le réservoir étant disposé en amont du compresseur et la vanne étant disposée en amont du réservoir ;
- une deuxième branche comportant, une vanne, l'évaporateur et l'échangeur thermique ;
- une troisième branche comportant l'évapo-condenseur ;
lesdites première, deuxième et troisième branches étant reliées en parallèle les unes aux autres.

Selon une autre caractéristique possible, le premier circuit comprend :
- une quatrième branche qui relie la deuxième branche à la troisième branche ;
   la liaison étant réalisée sur la deuxième branche en amont des premier et deuxième détendeurs et et en aval de la vanne de la deuxième branche dans le sens de l'écoulement du fluide comme indiqué sur la figure, la liaison étant réalisée sur la troisième branche entre le détendeur bidirectionnel et l'évapo-condenseur ;
- une cinquième branche comportant une vanne qui relie la troisième branche à la première branche, la liaison sur la troisième branche étant réalisée entre le troisième détendeur et l'évapo-condenseur, la liaison sur la première branche entre le réservoir et la vanne de la première branche.

Selon une autre caractéristique possible, la deuxième branche du premier circuit comprend deux sous-branches connectées en parallèle l'une de l'autre, l'une comportant l'évaporateur et l'autre l'échangeur thermique.

L'invention sera mieux comprise, et d'autres buts, détails, caractéristiques et avantages de celle-ci apparaîtront plus clairement au cours de la description suivante d'un mode de réalisation particulier de l'invention, donnée uniquement à titre illustratif et non limitatif, en référence aux dessins annexés. L'invention est définie par la revendication indépendante 1 annexée. Sur les dessins :
- les figures 1 et 1' représentent respectivement une vue schématique des circuits de fluide caloporteur et/ou réfrigérant du dispositif de conditionnement thermique selon l'invention ;
- la figure 2 est une représentation schématique linéaire lorsque le circuit de la figure 1 fonctionne selon un premier mode ;

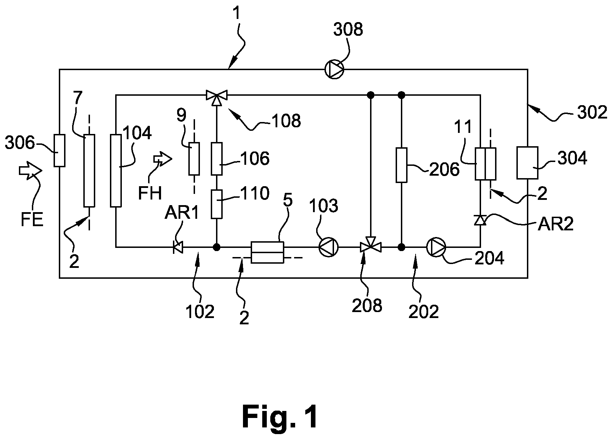

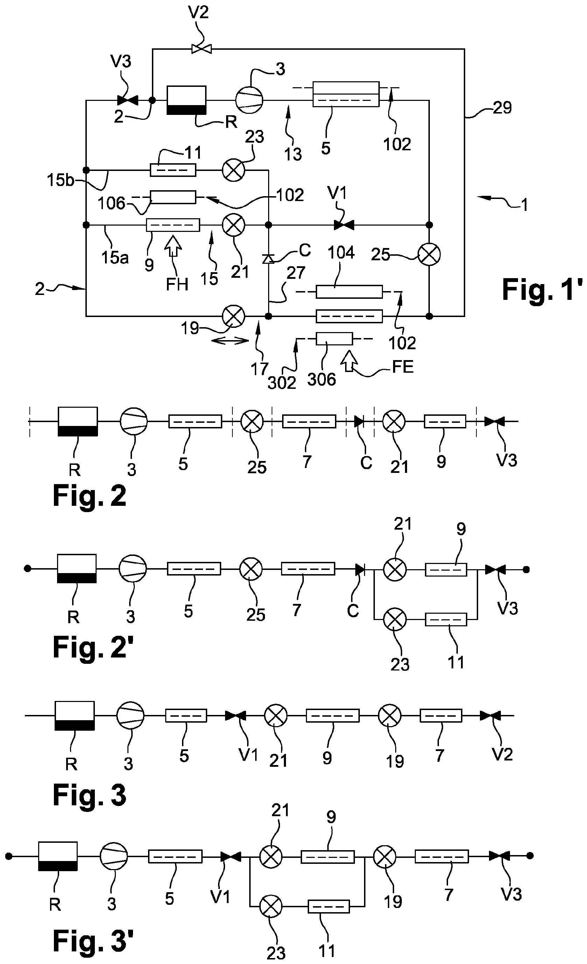

- la figure 2' est une représentation schématique linéaire lorsque le circuit de la figure 1 fonctionne selon une variante du premier mode ;
- la figure 3 est une représentation schématique linéaire lorsque le circuit de la figure 1 fonctionne selon un deuxième mode ;
- la figure 3' est une représentation schématique linéaire lorsque le circuit de la figure 1 fonctionne selon une variante du deuxième mode ;

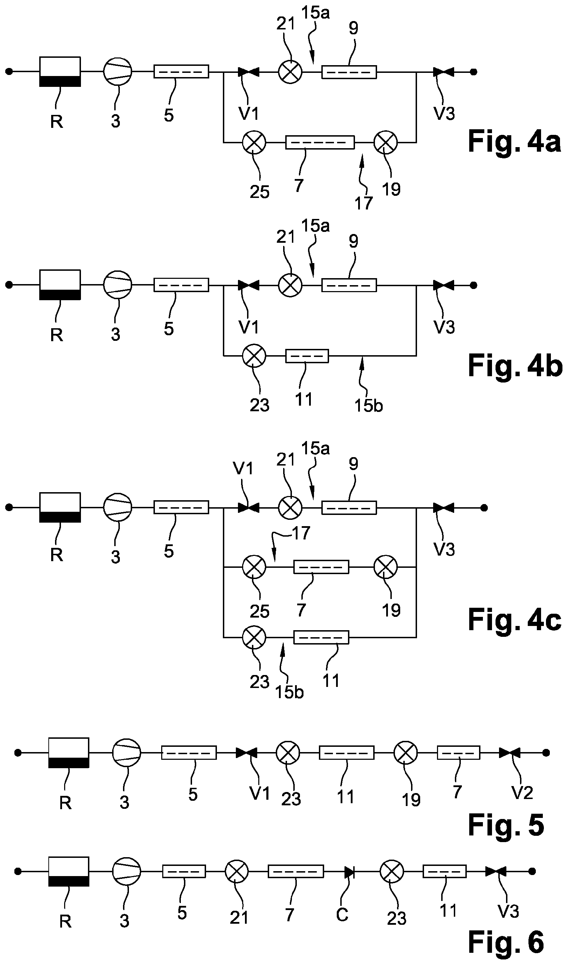

- la figure 4a est une représentation schématique linéaire lorsque le circuit de la figure 1 fonctionne selon une variante de fonctionnement du troisième mode ;
- la figure 4b est une représentation schématique linéaire lorsque le circuit de la figure 1 fonctionne selon une autre variante de fonctionnement du troisième mode ;
- la figure 4c est une représentation schématique linéaire lorsque le circuit de la figure 1 fonctionne selon encore une autre variante de fonctionnement du troisième mode ;
- la figure 5 est une représentation schématique linéaire lorsque le circuit de la figure 1 fonctionne selon un quatrième mode ;
- la figure 6 est une représentation schématique linéaire lorsque le circuit de la figure 1 fonctionne selon un cinquième mode.

Les figures 1 et 1' représentent des vues schématiques partielles du dispositif 1 de conditionnement thermique pour un véhicule automobile hybride ou électrique.

On notera que les termes « amont » et « aval » seront utilisés pour faciliter la description de l'invention, ceci en référence au sens de circulation du fluide dans le circuit considéré.

Ledit dispositif de conditionnement thermique 1 comprend, d'une part, un premier circuit 2, plus particulièrement représenté à la figure 1', dans lequel est apte à circuler un fluide frigorigène, et, d'autre part, un deuxième circuit 102, plus particulièrement représenté à la figure 1, dans lequel est apte à circuler un fluide caloporteur.

Ledit premier circuit 2 comprend au moins un compresseur 3, un condenseur 5, un évapo-condenseur 7 configuré pour être traversé par un flux d'air extérieur et un évaporateur 9 destiné à conditionner thermiquement un flux d'air destiné à l'habitacle du véhicule.

On notera que le dispositif selon l'invention est apte à fonctionner quel que soit le type d'architecture du premier circuit, néanmoins l'architecture du premier circuit détaillée ci-après permet d'exploiter pleinement l'architecture du deuxième circuit détaillée ci-dessous.

Ledit deuxième circuit 102 comprend au moins une pompe 103 et un radiateur de refroidissement 104.

Le radiateur de refroidissement 104 est disposé de manière à pouvoir être traversé par au moins une partie du flux d'air extérieur FE, et plus particulièrement en aval de l'évapo-condenseur 7 de manière à pouvoir être traversé par au moins une partie du flux d'air extérieur FE ayant traversé ledit évapo-condenseur 7.

Le condenseur 5, dit condenseur sur eau, couple thermiquement les premier 2 et deuxième 102 circuits et est disposé, sur le premier circuit 2 directement en aval d'un compresseur 3.

Le condenseur 5 est également disposé sur le deuxième circuit 102 en aval de la pompe 103.

Plus particulièrement, le deuxième circuit 102 comprend un radiateur de chauffage 106 disposé en parallèle du radiateur de refroidissement 104.

Le radiateur de chauffage 106 est par exemple logé dans un dispositif de ventilation, chauffage et/ou climatisation du véhicule automobile et permet de chauffer un flux d'air destiné à déboucher dans l'habitacle du véhicule.

On notera qu'un dispositif de ventilation, chauffage, et/ou climatisation est un boîtier situé sous le tableau de bord du véhicule. Ce dispositif comprend un ou plusieurs échangeurs thermiques qui ont pour fonction de conditionner thermiquement le flux d'air destiné à l'habitacle, ainsi qu'au moins une entrée d'air et au moins une sortie d'air débouchant dans l'habitacle. Le dispositif peut également comprendre un pulseur d'air, afin de générer un flux d'air entre lesdites au moins une entrée et sortie d'air.

Le deuxième circuit 102 comprend une ou plusieurs vannes 108 configurées pour que le deuxième circuit 102 fonctionne selon au moins les trois modes suivants, dans lesquels le fluide caloporteur est apte à circuler successivement en série par :
- le condenseur 5 puis par le radiateur de refroidissement 104, dit premier mode, ou
- le condenseur 5 et le radiateur de chauffage 106, dit deuxième mode ;
ou dans lequel le fluide caloporteur est apte à circuler par le condenseur 5 et à la fois par le radiateur de refroidissement 104 et le radiateur de chauffage 106 qui sont disposés en parallèle l'un par rapport à l'autre, dit troisième mode.

Le premier mode de fonctionnement du deuxième circuit 102 permet notamment un transfert de calories du premier circuit 2 vers le deuxième circuit 102 par l'intermédiaire du condenseur 5 et d'améliorer la performance de certaines modes de fonctionnement du premier circuit 2, tel que le mode « climatisation » ou le mode « charge rapide de la batterie », ces modes seront plus détaillés ci-après. C'est-à-dire des modes de fonctionnement du premier circuit 2 dans lesquels ledit circuit 2 est configuré pour dissiper les calories par l'intermédiaire du condenseur 5 et de l'evapo-condenseur 7 et refroidir un flux d'air destiné à l'habitacle par l'intermédiaire de l'évaporateur 9.

Le deuxième mode de fonctionnement du deuxième circuit 102 permet notamment en coopération avec le premier circuit 102 de refroidir l'air destiné à l'habitacle, via l'évaporateur 9, puis de le réchauffer, via le radiateur de chauffage 106, cela correspond par exemple à un mode déshumidification de l'air destiné à l'habitacle.

Le troisième mode permet de dissiper le surplus de puissance produite par le premier circuit quand celui-ci fonctione en mode « pompe à chaleur », plus particulièrement quand l'évapo-condenseur 7 n'est pas utilisé. Ainsi, la ou les vannes qui permettent ces différents modes de fonctionnement peut être une vanne trois-voies disposée en amont ou en aval du radiateur de chauffage 106 (vannes convergente ou divergente selon leur emplacement dans le deuxième circuit 102).

La vanne trois-voies, quand elle est disposée en amont du radiateur de chauffage 106, est divergente, tandis que lorsqu'elle est placée en aval du radiateur de chauffage 106, elle est convergente. Par ailleurs, la vanne trois-voies peut être également remplacée par deux vannes deux-voies.

Ledit deuxième circuit 102 peut également comprendre un dispositif de chauffage électrique 110 du fluide caloporteur qui est disposé en amont du radiateur de chauffage 106. Le dispositif de chauffage électrique 110 permet de chauffer le fluide avant que celui-ci ne traverse le radiateur de chauffage 106 lorsque le dispositif 1 n'est pas en mesure de fournir la puissance nécessaire pour chauffer le fluide caloporteur (et par extension le flux d'air) à la température souhaitée.

Ledit dispositif 1 comprend également un troisième circuit 202 dans lequel circule un fluide caloporteur. Ledit troisième circuit 202 comprend une pompe 204, un organe électrique 206 du véhicule et un échangeur thermique 11 couplant thermiquement les premier 2 et troisième circuits 202 l'un avec l'autre. L'organe électrique 206 est par exemple une batterie électrique du véhicule. Le troisième circuit 202 est configuré pour que le fluide caloporteur circule, grâce à la pompe 204, successivement à travers l'échangeur thermique 11 et l'organe électrique 206.
Ce mode de fonctionnement du troisième circuit, dit premier mode dudit circuit, est un mode qui permet d'homogénéiser la température de la batterie en jouant sur l'inertie du fluide caloporteur, l'échangeur 11 permettant également, selon le mode de fonctionnement du premier circuit 2 de refroidir ou réchauffer l'organe électrique 206.
Dans la représentation du dispositif 1 à la figure 1, les deuxième 102 et troisième 202 circuits sont interconnectés, mais peuvent aussi être opérés de manière à permettre au fluide caloporteur de circuler indépendamment dans le deuxième 102 et le troisième 202 circuits.
Ainsi, le dispositif 1 comprend une ou plusieurs vannes configurées 208 pour permettre au fluide caloporteur de circuler de façon indépendante dans les deuxième 102 et troisième 202 circuits. On peut ainsi faire fonctionner le deuxième circuit 102 selon l'un des trois de modes de fonctionnement décrit ci-avant, tandis que le troisième circuit 201 fonctionne selon le premier mode décrit ci-avant.

Néanmoins, lorsque les deuxième 102 et troisième 202 circuits sont interconnectés, ces circuits peuvent être configurés pour présenter un mode de fonctionnement supplémentaire, dans lequel le fluide caloporteur traverse successivement et en série le condenseur 5, le radiateur de chauffage 106 et l'organe électrique 206. Ce mode de fonctionnement supplémentaire permet notamment de chauffer l'organe électrique 206. On notera que la présence d'un dispositif de chauffage électrique 110 de fluide au niveau du deuxième circuit 102, sans être nécessaire, présente l'avantage d'augmenter l'efficacité de ce mode de fonctionnement.

On notera également qu'il est avantageux de disposer un clapet anti-retour AR2 entre l'échangeur 11 et la pompe 204 afin d'empêcher le fluide caloporteur de circuler, dans ledit mode supplémentaire, à travers l'échangeur 11 (il n'y a donc pas d'échanges thermiques entre les troisième et premier circuits via l'échangeur 11).

Le dispositif selon l'invention peut également comprendre un circuit 302, dit circuit moteur, de fluide caloporteur couplé thermiquement au moteur 304, par exemple électrique, du véhicule.

Ledit circuit moteur 302 comprenant une pompe 308 et un radiateur 306 de refroidissement du moteur.

Le radiateur 306 de refroidissement du moteur est préférentiellement disposé en amont, par rapport au flux d'air extérieur FE, de l'évapo-condenseur 7.

Le circuit moteur ne présente qu'un seul mode de fonctionnement dans lequel le fluide caloporteur circule successivement à travers le moteur 304 (ou plus exactement à un échangeur couplé thermiquement audit moteur) et ensuite par le radiateur de refroidissement 306. Ce mode de fonctionnement est activé lorsqu'il est nécessaire de refroidir le moteur 304.

La figure 1', quant à elle, représente une vue schématique du premier circuit 2 de conditionnement thermique pour un véhicule automobile hybride ou électrique.

Le premier circuit 2 comprend une pluralité d'échangeur de chaleur, notamment un compresseur 3, un condenseur 5, un évaporateur 9, un évapo-condenseur 7 et un échangeur thermique 11 couplé thermiquement à une batterie électrique dudit véhicule. On notera cependant que ledit échangeur thermique 11 peut être couplé thermiquement à tout organe électrique du véhicule nécessitant d'être conditionné thermiquement.

Le premier circuit 2 comprend également des branches reliant ses différents éléments les uns aux autres, de manière à ce qu'un fluide frigorigène soit apte à circuler dans ledit circuit 1 selon des chemins définis.

On notera par exemple que :
- l'évapo-condenseur 7 peut être disposé en face avant du véhicule, l'évapo-condenseur étant apte à être traversé par un flux d'air (par exemple extérieur). L'évapo-condenseur permet un échange de chaleur entre un flux d'air traversant ledit évapo-condenseur et le fluide frigorigène circulant à l'intérieur de l'évapo-condenseur. Le flux d'air traversant ledit évapo-condenseur est par exemple un flux d'air extérieur FE.
- L'évaporateur 9 est disposé à l'intérieur d'un dispositif de ventilation, chauffage et/ou climatisation du véhicule automobile. L'évaporateur permet un échange de chaleur entre un flux d'air traversant ledit évaporateur et le fluide frigorigène circulant à l'intérieur dudit évaporateur. Plus particulièrement, l'évaporateur a pour fonction principale de refroidir un flux d'air destiné à aboutir dans l'habitacle.

L'échangeur thermique 11, c'est-à-dire l'échangeur thermique couplé thermiquement à un organe électrique ou à une batterie, a pour fonction de conditionner thermiquement l'organe électrique ou la batterie, c'est-à-dire à la chauffer ou à la refroidir en fonction des besoins, afin que la batterie ou l'organe électrique reste à une température adéquate pour préserver sa durée de vie et son rendement.

L'échangeur batterie permet également les échanges de chaleur entre le fluide caloporteur et le fluide frigorigène, ces échanges de chaleur peuvent être directs ou indirects.

Plus particulièrement, le premier circuit 2 est configuré pour fonctionner selon différents modes qui seront détaillés ci-après.

Ainsi, ledit premier circuit 2 comprend :
- une première branche 13 comportant le compresseur 3 et le condenseur 5 disposé en aval du compresseur 3 ;
- une deuxième branche 15 comportant l'évaporateur 9 et l'échangeur 11 thermique couplé thermiquement à un organe électrique ;
- une troisième branche 17 comportant l'évapo-condenseur 7.

Lesdites première 13, deuxième 15 et troisième 17 branches sont reliées en parallèle les unes aux autres. Ainsi, la première branche 13 comporte un réservoir R placé directement en amont du compresseur 3, lui-même en amont du condenseur 5. Le terme « directement » doit être interprété comme le fait qu'il n'y a pas d'élément intermédiaire entre deux sous-éléments constitutifs dudit circuit. La première branche 13 comprend également une vanne V3 située en amont du réservoir R.

La deuxième branche 15 comprend deux sous-branches 15a et 15b connectées en parallèle l'une de l'autre, l'une comportant l'évaporateur 9 et l'autre l'échangeur thermique 11. La première sous-branche 15a comporte l'évaporateur 9 et la deuxième sous-branche 15b comporte l'échangeur thermique 11. La deuxième branche 15 comprend également une vanne V1 située en amont des premier et deuxième détendeurs 21 et 23.

La sortie 5a du condenseur est ainsi reliée aux deuxième 15 et troisième 17 branches du circuit par l'intermédiaire d'une quatrième branche 19, dite branche de liaison.

De plus, ledit premier circuit 2 comprend au moins trois détendeurs :
- un premier détendeur 21 situé directement en amont de l'évaporateur 9 ;
- un deuxième détendeur 23 situé directement en amont de l'échangeur thermique 11 ;
- un troisième détendeur 25 situé directement en amont de l'évapo-condenseur 7 lorsque celui-ci fonctionne comme un condenseur.

Par ailleurs, le circuit comprend :
- une quatrième branche 27 qui relie la deuxième branche 15 à la troisième branche 17, la liaison étant réalisée sur la deuxième branche 15 en amont des premier et deuxième détendeurs, respectivement 21 et 23, et en aval de la vanne V1 de la deuxième branche 15 dans le sens de l'écoulement du fluide, la liaison étant réalisée sur la troisième branche 17 entre le détendeur bidirectionnel 19 et l'évapo-condenseur 7 ;
- une cinquième branche 29 comportant une vanne V2 qui relie la troisième branche 17 à la première branche 13, la liaison sur la troisième branche 17 étant réalisée entre le troisième détendeur 25 et l'évapo-condenseur 7, la liaison sur la première branche étant réalisée entre le réservoir R et la vanne V3 de la première branche 13.

Par ailleurs, la quatrième branche 27 comprend un clapet anti-retour C, ce dernier permet au fluide réfrigérant de refluer vers l'évapo-condenseur 7 dans certains modes de fonctionnement.

La figure 2 est donc une représentation schématique linéaire du premier circuit 2 de conditionnement thermique lorsque ledit circuit 2 fonctionne selon un premier mode de fonctionnement.

Ce premier mode permet notamment de refroidir l'air destiné à l'habitacle du véhicule par l'intermédiaire de l'évaporateur, par exemple situé dans le dispositif de ventilation, chauffage et/ou climatisation (non représenté).

Ainsi, dans ce premier mode, le fluide réfrigérant est apte à circuler successivement dans le condenseur, l'évapo-condenseur puis dans l'évaporateur.

Le fluide réfrigérant est donc comprimé par le compresseur 3, à la sortie du compresseur 3 le fluide réfrigérant est dans un état gazeux haute pression, puis subit une condensation réalisée successivement par le condenseur 5 et l'évapo-condenseur 7 (fonctionnant ainsi comme un condenseur). Le fluide réfrigérant en sortie de l'évapo-condenseur est alors dans un état si possible liquide et sous refroidi à haute pression, et va subir une détente réalisée par premier détendeur 21, le fluide est alors détendu à basse pression avant de circuler à travers l'évaporateur 9.

Le flux d'air destiné à l'habitacle et traversant l'évaporateur 9 cède alors des calories (ou de la chaleur) au fluide réfrigérant, réchauffant ce dernier et permettant le refroidissement du flux d'air destiné à déboucher dans l'habitacle.

On notera par ailleurs que l'évapo-condenseur 7 doit être traversé par un flux d'air, extérieur dans le cas présent, pour permettre la condensation du fluide réfrigérant le traversant.

De plus, dans le premier mode de fonctionnement, le troisième détendeur 25 situé en amont de l'évapo-condenseur 7 est complètement ouvert.

Ce premier mode de fonctionnement peut, par ailleurs, être utilisé pour la déshumidification de l'air destiné à déboucher dans l'habitacle. On assèche l'air en le refroidissant, d'abord, par l'évaporateur 9, puis en le chauffant par l'intermédiaire du condenseur 5.

Dans certaines situations où il y a un excès de puissance fourni par le compresseur 3, l'évapo-condenseur 7 complète la condensation du fluide réfrigérant issu du condenseur 5.

Une variante de ce premier mode de fonctionnement est représentée à la figure 2', plus particulièrement dans cette variante, le deuxième détendeur 23 permet au fluide de circuler dans l'échangeur thermique 11. Ainsi, on peut refroidir ou déshumidifier le flux d'air destiné à déboucher dans l'habitacle tout en refroidissant la batterie du véhicule par l'intermédiaire de l'échangeur thermique 11.

Ainsi, dans cette variante du premier mode, le fluide réfrigérant est apte à circuler successivement dans le condenseur 5, l'évapo-condenseur 7 puis dans l'évaporateur 9 et l'échangeur thermique 11 qui sont disposés en parallèle l'un par rapport à l'autre.

On notera ainsi que :
- le deuxième détendeur 23 fait office de vanne lorsque le premier circuit 2 fonctionne selon le premier mode et de détendeur dans la variante du premier mode ;
- l'évaporateur 9 et l'échangeur thermique 11 fonctionnent à des niveaux de pression sensiblement équivalents ;
- les premier et troisième détendeurs respectivement placés en amont de l'évaporateur 9 et de l'échangeur thermique 11 permettent également de réguler (ou répartir) le débit de fluide réfrigérant dans chacun des échangeurs afin de répondre aux besoins spécifiques de chacun de ces éléments.

Dans le premier mode de fonctionnement du premier circuit 2, ou de sa variante, il est avantageux, pour optimiser le fonctionnement du dispositif que le deuxième circuit 102 et le quatrième circuit 302 fonctionnent, respectivement, selon leur premier mode de fonctionnement, tel que décrit ci-avant.

Le quatrième circuit 302 peut également fonctionner selon son mode de fonctionnement, tel que décrit ci-avant, s'il est nécessaire de refroidir le moteur 304.

La figure 3 est donc une représentation schématique linéaire du premier circuit 2 de conditionnement thermique lorsque ledit circuit 2 fonctionne selon un deuxième mode de fonctionnement.

Ce deuxième mode permet notamment de réchauffer l'air destiné à l'habitacle du véhicule par l'intermédiaire de l'évaporateur 9 et du condenseur 5.

Ainsi, dans ce deuxième mode, le fluide réfrigérant est apte à circuler successivement dans le condenseur 5, l'évaporateur 9 puis dans l'évapo-condenseur 7.

Le fluide réfrigérant est donc comprimé par le compresseur 3, à la sortie du compresseur 3 le fluide réfrigérant est dans un état gazeux haute pression, traverse le condenseur 5 puis circule successivement par l'évaporateur 9 et l'évapo-condenseur 7 (fonctionnant comme un évaporateur).

Plus particulièrement, le fluide réfrigérant en sortie du condenseur 5 subit ou non une détente par le premier détendeur 21, qui peut être alors partiellement ou complètement ouvert, afin d'amener le fluide réfrigérant dans un état de pression intermédiaire, avant de circuler dans l'évaporateur 9. Ceci permet de contrôler la pression du fluide réfrigérant afin de ne pas dépasser la pression maximale admissible par l'évaporateur 9. Le flux d'air destiné à l'habitacle est ainsi réchauffé par la traversée successive de l'évaporateur 9 et du condenseur 5.

En sortie de l'évaporateur 9, le fluide réfrigérant qui a été refroidi par l'air traversant l'évaporateur, subit une détente par le détendeur bidirectionnel 19 qui l'amène généralement dans un état de mélange liquide-vapeur à basse pression avant que celui-ci ne circule dans l'évapo-condenseur 7. Ledit évapo-condenseur 7 (fonctionnant donc comme un évaporateur), traversé par un flux d'air extérieur, permet l'évaporation du fluide réfrigérant (le flux d'air cédant des calories audit fluide). Ainsi, à la sortie de l'évapo-condenseur 7, le fluide est à l'état proche de la « saturation gaz » à basse-pression avant que celui-ci ne soit à nouveau comprimé par le compresseur 3.

Ce deuxième mode est préférentiellement utilisé pour une température extérieure (ou ambiante) inférieure à -5°C, mais fonctionne également pour des températures extérieures comprises entre -5°C et 20°C.

Par ailleurs, si la température extérieure est comprise entre 2 et 5°C, l'évaporateur 9 fonctionne de préférence alors en mode évaporateur, le fluide réfrigérant subit alors deux évaporations en série, réalisées respectivement par l'évaporateur 9 et l'évapo-condenseur 7.

Cela permet, par ailleurs, de réaliser, dans certains modes de fonctionnement du dispositif de chauffage, ventilation et/ou climatisation (plus particulièrement quand le flux d'air destiné à l'habitacle provient au moins en partie de l'habitacle lui-même et non pas seulement de l'extérieur), une récupération de la chaleur sur l'air provenant de l'habitacle et sur l'air ambiant (ou extérieur), cela a pour conséquence de limiter les risques de givrage de l'évapo-condenseur 7.

Une variante de ce deuxième mode de fonctionnement est représentée à la figure 3', plus particulièrement dans cette variante, le deuxième détendeur 23 permet au fluide de circuler dans l'échangeur thermique 11.

Ainsi, on peut réchauffer le flux d'air destiné à déboucher dans l'habitacle tout en réchauffant ou refroidissant la batterie (ou un organe électrique du véhicule) du véhicule par l'intermédiaire de l'échangeur thermique 11.

En effet, le fluide réfrigérant peut réchauffer la batterie (ou un organe électrique du véhicule) lorsque celle-ci présente une température inférieure à 10°C.

Ainsi, dans cette variante du deuxième mode, le fluide réfrigérant est apte à circuler successivement dans le condenseur 5, l'évaporateur 9 et l'échangeur thermique 11 qui sont disposés en parallèle l'un par rapport à l'autre, et par la suite dans l'évapo-condenseur 7.

On notera ainsi que :
- le deuxième détendeur 23 fait office de vanne fermée lorsque le premier circuit 2 fonctionne selon le deuxième mode et de détendeur dans la variante du deuxième mode ;
- l'évaporateur 9 et l'échangeur thermique 11 fonctionnent à des niveaux de pression sensiblement équivalents ;
- les premier et troisième détendeurs, respectivement 21 et 23, ainsi que le détendeur bidirectionnel 19 respectivement placés en amont de l'évaporateur 9, de l'échangeur thermique 11 et de l'évapo-condenseur 7 (l'échangeur bidirectionnel étant également en aval de l'évaporateur et de l'échangeur thermique) permettent d'ajuster la température de l'évaporateur 9 afin de limiter si nécessaire l'échange thermique, au niveau de l'échangeur 11 avec l'organe électrique. Plus particulièrement, on peut faire en sorte que la batterie (ou l'organe électrique si celui-ci est apte à le faire) absorbe une grande partie de la puissance ou chaleur produite par le premier circuit 2.

Dans le deuxième mode de fonctionnement du premier circuit 2, ou de sa variante, il est avantageux, pour optimiser le fonctionnement du dispositif que le deuxième circuit 102 fonctionne selon son deuxième mode de fonctionnement et que le quatrième circuit 302 fonctionne selon son premier mode de fonctionnement, tels qu'ils ont été décrits ci-avant. Cependant, en fonction, des besoins de chauffage de l'organe électrique 206 et des conditions extérieures, les deuxième 102 et troisième 202 circuits peuvent également fonctionner selon le mode de fonctionnement supplémentaire décrit ci-dessus.

Le quatrième circuit 302 peut également fonctionner selon son mode de fonctionnement, tel que décrit ci-avant, s'il est nécessaire de refroidir le moteur 304.

Plus particulièrement, dans la première variante du troisième mode de fonctionnement représentée à la figure 4a, ledit fluide traverse l'évapo-condenseur 7 et l'évaporateur 9 qui sont disposés en parallèle l'un de l'autre.

Ainsi, le fluide destiné à traverser la deuxième branche 15 puis la première sous-branche 15a subit une détente par le premier détendeur 21 avant de circuler dans l'évaporateur 9.

Tandis que le fluide destiné à traverser la troisième branche 17 subit une détente par le troisième détendeur 25 avant de circuler dans l'évapo-condenseur 7. A la sortie de la l'évapo-condenseur 7, le fluide réfrigérant subit, si nécessaire, une détente par le détendeur bidirectionnel 19.

Par la suite, les portions de fluide réfrigérant ayant circulées respectivement à travers l'évaporateur 9 et l'évapo-condenseur 7 se rejoignent en amont de la troisième vanne V3 avant de circuler dans la première branche 13 et de déboucher dans le réservoir R avant, que ledit fluide, soit ré-aspiré par le compresseur 3.

Ainsi, le flux d'air destiné à déboucher dans l'habitacle est refroidi par l'évaporateur 9, avant d'être réchauffé par le condenseur 5.

Plus particulièrement, dans la deuxième variante du troisième mode de fonctionnement représentée à la figure 4b, ledit fluide traverse l'échangeur thermique 11 et l'évaporateur 9 qui sont disposés en parallèle l'un de l'autre.

Ainsi, le fluide destiné à traverser la deuxième branche 15 puis la première sous-branche 15a subit une détente par le premier détendeur 21 avant de circuler dans l'évaporateur 9.

Tandis que le fluide destiné à traverser la deuxième branche 15 puis la première sous-branche 15b subit une détente par le deuxième détendeur 23 avant de circuler dans l'échangeur thermique 11.

Par la suite, les portions de fluide réfrigérant ayant circulées respectivement à travers l'évaporateur 9 et l'échangeur thermique 11 se rejoignent en amont de la troisième vanne V3 avant de circuler dans la première branche 13 et de déboucher dans le réservoir R avant, que ledit fluide, soit ré-aspiré par le compresseur 3.

Ainsi, le flux d'air destiné à déboucher dans l'habitacle est refroidi par l'évaporateur 9, avant d'être réchauffé par le radiateur de chauffage 106.

Plus particulièrement, dans la troisième variante du troisième mode de fonctionnement représentée à la figure 4c, ledit fluide traverse l'évaporateur 9, l'évapo-condenseur 7 et l'échangeur thermique 11 qui sont disposés en parallèle les uns des autres.

Ainsi, le fluide destiné à traverser la deuxième branche 15 puis la première sous-branche 15a subit une détente par le premier détendeur 21 avant de circuler dans l'évaporateur 9.

Le fluide destiné à traverser la deuxième branche 15 puis la première sous-branche 15b subit une détente par le deuxième détendeur 23 avant de circuler dans l'échangeur thermique 11.

Le fluide destiné à traverser la deuxième branche 15 puis la première sous-branche 15b subit une détente par le deuxième détendeur 23 avant de circuler dans l'échangeur thermique 11.

Tandis que le fluide destiné à traverser la troisième branche 17 subit une détente par le troisième détendeur 25 avant de circuler dans l'évapo-condenseur 7. A la sortie de la l'évapo-condenseur 7, le fluide réfrigérant subit une détente par le détendeur bidirectionnel 19.

Par la suite, les portions de fluide réfrigérant ayant circulées respectivement à travers l'évaporateur 9, l'échangeur thermique 11 et l'évapo-condenseur 7 se rejoignent en amont de la troisième vanne V3 avant de circuler dans la première branche 13 et de déboucher dans le réservoir R avant, que ledit fluide, soit ré-aspiré par le compresseur 3.

Ainsi, le flux d'air destiné à déboucher dans l'habitacle est refroidi par l'évaporateur 9, avant d'être réchauffé par le radiateur de chauffage 106.

Dans le troisième mode de fonctionnement du premier circuit 2, ou de sa variante, il est avantageux, pour optimiser le fonctionnement du dispositif que le deuxième circuit 102 fonctionne selon son deuxième mode de fonctionnement et que le quatrième circuit 302 fonctionne selon son premier mode de fonctionnement, tels que décrits ci-avant.

Le quatrième circuit 302 peut également fonctionner selon son mode de fonctionnement, tel que décrit ci-avant, s'il est nécessaire de refroidir le moteur 304.

La figure 5, quant à elle, est une représentation schématique linéaire lorsque le circuit de la figure 1 fonctionne selon un quatrième mode de fonctionnement, dit mode « chauffage batterie ».

Dans le quatrième mode de fonctionnement, ledit fluide traverse successivement le condenseur 5, l'échangeur thermique 11 et l'évapo-condenseur 7. En effet, ces éléments 5, 7 et 11 sont disposés en série dans le quatrième mode de fonctionnement.

Le fluide réfrigérant est donc comprimé par le compresseur 3, à la sortie du compresseur 3, le fluide réfrigérant est dans un état gazeux haute pression, puis subit une condensation réalisée successivement par le condenseur 5. Le fluide réfrigérant en sortie du condenseur 5 subit, si nécessaire, une détente réalisée par le deuxième détendeur 23 avant de circuler dans le l'échangeur thermique 11.

Par la suite, le fluide réfrigérant subit une détente réalisée par le détendeur bidirectionnel 19, avant de circuler à travers l'évapo-condenseur 7, puis le réservoir R avant d'être ré-aspiré par le compresseur 3.

Le quatrième mode de fonctionnement a pour fonction de chauffer la batterie électrique du véhicule (ou un organe électrique), mais ledit mode peut également avoir pour fonction la récupération de chaleur (ou de calories) sur l'organe électrique, par l'intermédiaire de l'échangeur thermique 11. Plus particulièrement, il y a récupération de chaleur (ou de calories) sur l'organe électrique si la température d'évaporation au niveau de l'échangeur 11 est inférieure à la température dudit organe.

Dans le quatrième mode de fonctionnement du premier circuit 2, il est avantageux, pour optimiser le fonctionnement du dispositif que le deuxième circuit 102 fonctionne selon son deuxième mode de fonctionnement et que le quatrième circuit 302 fonctionne selon son premier mode de fonctionnement, tels que décrits ci-avant.

Le quatrième circuit 302 peut également fonctionner selon son mode de fonctionnement, tel que décrit ci-avant, s'il est nécessaire de refroidir le moteur 304.

La figure 6, quant à elle, est une représentation schématique linéaire lorsque le circuit de la figure 1 fonctionne selon un cinquième mode de fonctionnement, dit mode « refroidissement rapide de la batterie ou de l'organe électrique ».

Dans le cinquième mode de fonctionnement, ledit fluide traverse successivement le condenseur 5, l'évapo-condenseur 7 et l'échangeur thermique 11. En effet, ces éléments 5, 7 et 11 sont disposés en série dans le cinquième mode de fonctionnement.

Le fluide réfrigérant est donc comprimé par le compresseur 3, à la sortie du compresseur 3, le fluide réfrigérant est dans un état gazeux haute pression, puis subit une condensation réalisée successivement par le condenseur 5 et l'évapo-condenseur 7. Le fluide réfrigérant en sortie de l'évapo-condenseur 7 subit une détente réalisée par le deuxième détendeur 23 avant de circuler dans l'échangeur thermique 11.

Par la suite, le fluide réfrigérant rejoint le réservoir R avant d'être ré-aspiré par le compresseur 3.

Le cinquième mode de fonctionnement a pour fonction de refroidir la batterie électrique du véhicule lorsque celle-ci subit une charge rapide et est donc soumise à un échauffement important et rapide. Ce dernier mode peut également s'appliquer à un organe électrique qui subit un réchauffement rapide en raison d'une utilisation intense.

On notera que les adjectifs numéraux cardinaux utilisés pour qualifier ou désigner certains éléments ne sont utilisés qu'à titre indicatif et n'impliquent aucune limitation sur ces éléments.

Dans le cinquième mode de fonctionnement du premier circuit 2, il est avantageux, pour optimiser le fonctionnement du dispositif que le deuxième circuit 102 et que le troisième circuit 202 fonctionnent respectivement selon leur premier mode de fonctionnement, tels que décrits ci-avant.

Le quatrième circuit 302 peut également fonctionner selon son mode de fonctionnement, tel que décrit ci-avant, s'il est nécessaire de refroidir le moteur 304.

## Revendications

1. Dispositif de conditionnement thermique (1) pour un véhicule automobile hybride ou électrique, comprenant :
- un premier circuit (2) dans lequel est apte à circuler un fluide frigorigène ;
- un deuxième circuit (102) dans lequel est apte à circuler un fluide caloporteur ;
ledit premier circuit (2) comprenant au moins un compresseur (3), un condenseur (5), un évapo-condenseur (7) configuré pour être traversé par un flux d'air extérieur et un évaporateur (9) destiné à conditionner thermiquement un flux d'air destiné à l'habitacle du véhicule, ledit deuxième circuit (102) comprenant au moins une pompe (103) et un radiateur de refroidissement (104),
dispositif dans lequel :
- le radiateur de refroidissement (104) est disposé de manière à pouvoir être traversé par au moins une partie du flux d'air extérieur,
- le condenseur (5), dit condenseur sur eau, couple thermiquement les premier (2) et deuxième (102) circuits et est disposé, sur le premier circuit (2) directement en aval du compresseur (3) ;
le dispositif comprenant un troisième circuit (202) dans lequel circule un fluide caloporteur, ledit troisième circuit (202) comprenant une pompe (204), un organe électrique (206) du véhicule et un échangeur thermique (11) couplant thermiquement les premier (2) et troisième circuits (202), les deuxième (102) et troisième (202) circuits étant interconnectés,
**caractérisé en ce que** le dispositif comprend une ou plusieurs vannes configurées (208) pour permettre au fluide caloporteur de circuler de façon indépendante dans les deuxième (102) et troisième (202) circuits.

2. Dispositif selon la revendication précédente, **caractérisé en ce que** le radiateur de refroidissement (104) est disposé en aval de l'évapo-condenseur (7) de manière à pouvoir être traversé par au moins une partie du flux d'air extérieur ayant traversé ledit évapo-condenseur (7).

3. Dispositif selon la revendication 1, **caractérisé en ce que** le deuxième circuit (102) comprend un radiateur de chauffage (106) disposé en parallèle du radiateur de refroidissement (104).

4. Dispositif selon la revendication 2, **caractérisé en ce que** le deuxième circuit (102) comprend une ou plusieurs vannes (108) configurées pour que le deuxième circuit (102) fonctionne selon les modes suivants, dans lesquels le fluide caloporteur est apte à circuler successivement en série par :
- le condenseur (5) puis par le radiateur de refroidissement (104), ou
- le condenseur (5) et le radiateur de chauffage (106) ;
ou dans lequel le fluide caloporteur est apte à circuler par le condenseur (5) et à la fois par le radiateur de refroidissement (104) et le radiateur de chauffage (106) qui sont disposés en parallèle l'un par rapport à l'autre.

5. Dispositif selon la revendication 3 ou 4, **caractérisé en ce que** le deuxième circuit (102) comprend un dispositif de chauffage électrique (110) du fluide caloporteur qui est disposé en amont du radiateur de chauffage (106).

6. Dispositif selon l'une quelconque des revendications précédentes, **caractérisé en ce qu'**il comprend un circuit (302) de fluide caloporteur couplé thermiquement au moteur (304) du véhicule, dit circuit moteur, ledit circuit moteur (302) comprenant une pompe (308) et un radiateur (306) de refroidissement du moteur.

7. Dispositif selon la revendication précédente, **caractérisé en ce que** le radiateur (306) de refroidissement du moteur est disposé en amont, par rapport au flux d'air extérieur, de l'évapo-condenseur (7).

## Patentansprüche

1. Vorrichtung zur Temperierung (1) für ein Hybrid- oder Elektrokraftfahrzeug, umfassend:
- einen ersten Kreis (2), in dem ein Kältemittel zirkulieren kann;
- einen zweiten Kreis (102), in dem ein Wärmeträgerfluid zirkulieren kann;
wobei der erste Kreis (2) mindestens einen Kompressor (3), einen Kondensator (5), einen Verdampfungskondensator (7), der dazu eingerichtet ist, von einem Außenluftstrom durchströmt zu werden, und einen Verdampfer (9), der dazu bestimmt ist, einen für die Fahrgastzelle des Fahrzeugs bestimmten Luftstrom zu temperieren, umfasst, wobei der zweite Kreis (102) mindestens eine Pumpe (103) und einen Kühlradiator (104) umfasst,
wobei in der Vorrichtung:
- der Kühlradiator (104) so angeordnet ist, dass er von mindestens einem Teil des Außenluftstroms durchströmt werden kann,
- der Kondensator (5), wassergekühlter Kondensator genannt, die ersten (2) und zweiten (102) Kreise thermisch koppelt und in dem ersten Kreis (2) direkt stromab des Kompressors (3) angeordnet ist;
wobei die Vorrichtung einen dritten Kreis (202) umfasst, in dem ein Wärmeträgerfluid zirkuliert, wobei der dritte Kreis (202) eine Pumpe (204), ein elektrisches Element (206) des Fahrzeugs und einen Wärmetauscher (11), der die ersten (2) und dritten (202) Kreise thermisch koppelt, umfasst, wobei die zweiten (102) und dritten (202) Kreis verbunden sind,
**dadurch gekennzeichnet, dass** die Vorrichtung ein oder mehrere Ventile (208) umfasst, die dazu eingerichtet sind, dem Wärmeträgerfluid zu ermöglichen, in den zweiten (102) und dritten (202) Kreisen unabhängig zu zirkulieren.

2. Vorrichtung nach dem vorhergehenden Anspruch, **dadurch gekennzeichnet, dass** der Kühlradiator (104) stromab des Verdampfungskondensators (7) angeordnet ist, so dass er von mindestens einem Teil des Außenluftstroms, der den Verdampfungskondensator (7) durchströmt hat, durchströmt werden kann.

3. Vorrichtung nach Anspruch 1, **dadurch gekennzeichnet, dass** der zweite Kreis (102) einen Heizradiator (106) umfasst, der parallel zu dem Kühlradiator (104) angeordnet ist.

4. Vorrichtung nach Anspruch 2, **dadurch gekennzeichnet, dass** der zweite Kreis (102) ein oder mehrere Ventile (108) umfasst, die dazu eingerichtet sind, dass der zweite Kreis (102) gemäß den folgenden Modi funktioniert, in denen das Wärmeträgerfluid nacheinander in Reihe zirkulieren kann durch:
- den Kondensator (5), dann durch den Kühlradiator (104), oder
- den Kondensator (5) und den Heizradiator (106);
oder bei der das Wärmeträgerfluid durch den Kondensator (5) und sowohl durch den Kühlradiator (104) als auch durch den Heizradiator (106), die parallel zueinander angeordnet sind, zirkulieren kann.

5. Vorrichtung nach Anspruch 3 oder 4, **dadurch gekennzeichnet, dass** der zweite Kreis (102) eine elektrische Heizvorrichtung (110) für das Wärmeträgerfluid umfasst, die stromauf des Heizradiators (106) angeordnet ist.

6. Vorrichtung nach einem der vorhergehenden Ansprüche, **dadurch gekennzeichnet, dass** sie einen Wärmeträgerfluidkreis (302) umfasst, der thermisch mit dem Motor (304) des Fahrzeugs gekoppelt ist, Motorkreis genannt, wobei der Motorkreis (302) eine Pumpe (308) und einen Radiator (306) zur Kühlung des Motors umfasst.

7. Vorrichtung nach dem vorhergehenden Anspruch, **dadurch gekennzeichnet, dass** der Radiator (306) zur Kühlung des Motors in Bezug auf den Außenluftstrom stromauf des Verdampfungskondensators (7) angeordnet ist.

## Claims

1. Thermal conditioning device (1) for a hybrid or electric motor vehicle, comprising:
- a first circuit (2) in which a refrigerant is able to circulate;
- a second circuit (102) in which a heat-transport fluid is able to circulate;
said first circuit (2) comprising at least a compressor (3), a condenser (5), an evaporator-condenser (7) configured to have an exterior air flow pass through it and an evaporator (9) intended to thermally condition an air flow intended for the vehicle interior,
said second circuit (102) comprising at least a pump (103) and a cooling radiator (104),
in which device:
- the cooling radiator (104) is positioned in such a way as to be able to have at least part of the exterior air flow pass through it,
- the condenser (5), referred to as a water-cooled condenser, thermally couples the first (2) and second (102) circuits and is positioned, on the first circuit (2), directly downstream of the compressor (3);
the device comprising a third circuit (202) in which a heat-transport fluid circulates, said third circuit (202) comprising a pump (204), an electric component (206) of the vehicle and a heat exchanger (11) thermally coupling the first (2) and third (202) circuits,
the second (102) and third (202) circuits being interconnected,
**characterized in that** the device comprises one or more valves (208) configured to allow the heat-transport fluid to circulate independently in the second (102) and third (202) circuits.

2. Device according to the preceding claim, **characterized in that** the cooling radiator (104) is positioned downstream of the evaporator-condenser (7) so that it can have at least part of the exterior air flow that has passed through said evaporator-condenser (7) pass through it.

3. Device according to Claim 1, **characterized in that** the second circuit (102) comprises a heater (106) positioned in parallel with the cooling radiator (104) .

4. Device according to Claim 2, **characterized in that** the second circuit (102) comprises one or more valves (108) configured so that the second circuit (102) operates in the following modes, in which the heat-transport fluid is able to circulate successively in series through:
- the condenser (5) and then the cooling radiator (104), or
- the condenser (5) and the heater (106);
or wherein the heat-transport fluid is able to circulate through the condenser (5) and both through the cooling radiator (104) and the heater (106), which are positioned in parallel with one another.

5. Device according to Claim 3 or 4, **characterized in that** the second circuit (102) comprises an electric heating device (110) for heating the heat-transport fluid and which is positioned upstream of the heater (106) .

6. Device according to any one of the preceding claims, **characterized in that** it comprises a heat-transport-fluid circuit (302) thermally coupled to the vehicle engine (304), known as the engine circuit, said engine circuit (302) comprising a pump (308) and a cooling radiator (306) for cooling the engine.

7. Device according to the preceding claim, **characterized in that** the cooling radiator (306) for cooling the engine is positioned upstream, relative to the exterior air flow, of the evaporator-condenser (7).
